# FASCICULE DE BREVET EUROPEEN

(11) **EP 3 513 137 B1**
(45) Date de publication et mention de la délivrance du brevet: **08.07.2020**
(21) Numéro de dépôt: 17768840.5
(22) Date de dépôt: 01.09.2017
(51) Int. Cl.: F28D 20/02

(54) **MICRO TUBE DE FAISCEAU DE DISPOSITIF THERMIQUE DE STOCKAGE ET FAISCEAU ASSOCIÉ**
MIKROROHR EINES ROHRBÜNDELS EINER WÄRMESPEICHERVORRICHTUNG UND ZUGEHÖRIGES ROHRBÜNDEL
MICRO-TUBE OF A THERMAL STORAGE DEVICE TUBE BUNDLE AND ASSOCIATED TUBE BUNDLE

(30) Priorité: 15.09.2016 FR 1658606
(43) Date de publication de la demande: 24.07.2019
(73) Titulaire: Valeo Systemes Thermiques-THS, 78322 Le Mesnil Saint Denis Cedex (FR)
(72) Inventeur: BRY, Samuel, 53022 Laval (FR); BOISSELLE, Patrick, 53022 Laval (FR); SERVANTIE, Ambroise, 53022 Laval (FR); TISSOT, Julien, 78322 Le Mesnil Saint-Denis Cedex (FR); LISSNER, Michael, 78322 Le Mesnil Saint-Denis Cedex (FR); AZZOUZ, Kamel, 78322 Le Mesnil Saint-Denis Cedex (FR)
(74) Mandataire: Tran, Chi-Hai
(86) Numéro de dépôt international: PCT/FR2017/052323
(87) Numéro de publication internationale: WO 2018/050985

(56) Documents cités:
- WO-A1-2004/040222
- WO-A1-2010/099578
- DE-A1- 19 619 810
- US-A1- 2011 083 827

## Description

L'invention concerne le domaine des batteries thermiques et des dispositifs thermiques intégrés dans les échangeurs thermiques, en particulier dans les boîtes collectrices des échangeurs thermiques, ces dispositifs thermiques de stockage utilisant pour éléments d'échange de chaleur un faisceau de micro tubes pour stocker et libérer une quantité déterminée de chaleur, les micro-tubes comportant en leur sein un matériau à changement de phase (MCP). Ces batteries de stockage sont particulièrement adaptées pour une utilisation dans les véhicules automobiles.

En particulier, l'invention concerne un dispositif de fermeture des micro tubes composant le faisceau d'échange ainsi que l'arrangement de micro tubes en faisceau. L'invention se rapporte plus particulièrement à un micro-tube selon le préambule de la revendication 1, et tel que divulgué par le document DE 196 19 810 A1.

Une batterie thermique est, par exemple, utilisée pour diffuser de la chaleur, via le système de chauffage, dans l'habitacle d'un véhicule automobile hybride, c'est-à-dire combinant un moteur fonctionnant grâce à l'énergie thermique et à l'énergie électrique. Par ailleurs, ce type de batterie thermique peut servir à préchauffer un fluide caloporteur, l'huile du moteur ou l'huile de la boîte de vitesse automatique, et ce avant le démarrage à froid dudit véhicule automobile.

Lors de l'utilisation d'une batterie thermique avec un véhicule électrique, le chargement de ladite batterie thermique est, en principe, réalisé lors du chargement de la batterie électrique. La batterie électrique sert au déplacement dudit véhicule électrique. Lors d'un déplacement dudit véhicule électrique, l'énergie thermique stockée dans la batterie thermique peut être utilisée lors de la mise en marche du système de chauffage au sein de l'habitacle du véhicule automobile. Le système de chauffage pour chauffer l'habitacle d'un véhicule automobile fonctionne à l'aide d'un fluide tel qu'un fluide caloporteur. Afin de chauffer l'habitacle du véhicule automobile, la batterie thermique réchauffe le fluide caloporteur avant son passage à l'intérieur du radiateur de chauffage qui permet de transférer le fluide caloporteur à l'intérieur de l'habitacle. L'énergie fournie par la batterie thermique permet donc d'économiser l'énergie correspondante stockée par la batterie électrique. En d'autres termes, on supprime l'impact du fonctionnement du chauffage sur l'autonomie du véhicule électrique.

L'utilisation d'une batterie thermique avec un véhicule hybride permet de stocker l'énergie thermique lors du chargement de la batterie électrique. D'autre part, la batterie thermique peut être rechargée via le fluide caloporteur, lorsque le moteur du véhicule hybride bascule en mode thermique.

Lors de l'utilisation d'une batterie thermique avec un véhicule muni d'un moteur à combustion interne, l'énergie thermique stockée à l'intérieur de la batterie thermique provient de l'énergie produite lors d'un précédent roulage dudit véhicule. Les fluides utilisés pour refroidir le moteur ou la boîte de vitesse automatique par exemple, peuvent être utilisés pour charger la batterie thermique. En effet, l'huile de la boîte de vitesse automatique rejette, dans un usage classique, une quantité déterminée de chaleur. Ladite quantité déterminée de chaleur peut être stockée dans une batterie thermique et ensuite utilisée lors du démarrage du véhicule automobile pour permettre l'augmentation rapide de la température de l'huile de moteur et/ou de l'huile de la boîte de vitesse automatique, réduisant ainsi les frottements dus à la viscosité de ladite huile. En effet, la viscosité de l'huile est d'autant plus élevée que la température est basse. Si la température de l'huile n'augmente pas rapidement, notamment concernant l'huile de la boîte de vitesse automatique, les frottements entraînent une surconsommation de carburant et d'émissions de CO2 lors des premières minutes de l'utilisation du véhicule. La batterie thermique peut être utilisée dans des circuits d'huile de boîte de vitesse automatique, de fluide caloporteur, ou d'huile de moteur.

Dans la conception des batteries thermiques, il est déjà connu d'utiliser des micro tubes en matériau synthétique pour encapsuler un matériau à changement de phase (MCP) afin de pouvoir stocker et libérer une quantité déterminée de chaleur. Il est nécessaire de fermer les extrémités des micro tubes de manière étanche et durable pour garantir qu'il n'y ait pas de mélange du MCP avec le fluide caloporteur d'échange.

L'art antérieur divulgue une solution de fermeture des micro tubes par soudage. Ce procédé est relativement long pour assurer la fusion lors de la soudure du tube plastique et nécessite des exigences de nettoyage des faces soudées pour éviter les résidus dans le MCP. De plus, les risques de fuites sont élevés.

Il existe également des solutions à base de colle. Le collage, à l'aide de résine, présente des inconvénients : le temps de polymérisation est long, les procédés de mise en œuvre sont très contraignants. De plus, les conditions d'utilisation de la batterie thermique en milieu automobile ne sont pas très adaptées à ces solutions. Les conditions de température, les chocs thermiques, les conditions d'échange avec des fluides à base d'eau glycolée, d'huile sont incompatibles avec la tenue mécanique et/ou chimique des résines.

L'utilisation d'un simple bouchon mécanique présente lui aussi des inconvénients. L'étanchéité n'étant bien souvent pas garantie à 100%, des mélanges de MCP avec un fluide caloporteur tel que de l'huile de boîte de vitesse sont possibles, ce qui peut engendrer des dommages graves au système de transmission d'un véhicule. Un autre problème qui se pose avec la solution de simple bouchon mécanique est le risque qu'il soit expulsé lors du changement de phase du MCP. En effet, lors de son changement de phase, le MCP s'expanse et la pression interne dans le micro tube augmente, ce qui peut aboutir à l'expulsion du bouchon.

L'utilisation de bouchons expansés dans des collecteurs est une solution adaptée mais qui nécessite de réaliser le montage lors de l'assemblage de chacun des micro tubes sur la batterie même. L'étanchéité n'est alors contrôlée qu'une fois tous les micro tubes assemblés, le défaut d'un seul micro tube entrainant le rebut du faisceau entier.

Un des buts de la présente invention est donc de remédier au moins partiellement aux inconvénients de l'état de la technique en proposant un dispositif de fermeture étanche des micro tubes et dont la tenue mécanique est garantie dans le temps.

La présente invention concerne donc un micro tube de faisceau de stockage d'un dispositif thermique de stockage pour véhicule automobile comprenant au moins une embouchure et comprenant en son sein un matériau adapté pour stocker et libérer une quantité déterminée de chaleur, un dispositif de fermeture comprenant un insert d'obturation de l'embouchure dudit micro tube, l'insert d'obturation étant un rivet aveugle étanche comprenant un corps comportant un orifice borgne, ledit rivet étant expansé dans une extrémité dudit micro tube.

Selon un aspect de l'invention, le micro tube est en matériau métallique.

Selon un aspect de l'invention, ledit dispositif de fermeture comprend une bague d'expansion disposée sur la paroi externe de ladite extrémité du micro tube, ladite extrémité du micro tube étant pincée entre la bague d'expansion et le rivet.

Selon un aspect de l'invention, le rivet comprend une tête, l'orifice borgne dudit rivet débouchant dans la tête du rivet, la bague d'expansion étant en butée contre la tête du rivet.

Selon un aspect de l'invention, le micro tube est en matériau synthétique.

Selon un aspect de l'invention, le micro tube est en matériau plastique.

Selon un aspect de l'invention, ladite bague d'expansion est en inox ou en aluminium.

Pour un micro tube en plastique, il est avantageux d'associer au dispositif de fermeture une bague d'expansion métallique afin d'assurer une bonne étanchéité. En effet, le matériau plastique peut ne pas être suffisamment dur et/ou être trop élastique pour assurer une bonne compression du rivet lorsqu'il est expansé contre la paroi interne du micro tube ce qui ne garantit alors pas une bonne étanchéité du dispositif de fermeture.

La bague d'expansion permet de pallier à ce problème, le rivet expansé permettant de pincer le tube entre deux parois rigides, celle du rivet et celle de la bague d'expansion.

Pour un micro tube en métal, il n'est pas obligatoire d'associer au dispositif de fermeture une bague d'expansion, cela dépend du choix des matériaux de micro tubes et de rivet. En effet, le matériau métallique du micro tube peut alors permettre d'assurer une bonne compression du rivet contre la paroi interne du micro tube et donc garantir une étanchéité suffisante.

Selon un aspect de l'invention, le matériau adapté pour stocker et libérer une quantité déterminée de chaleur comprend un matériau à changement de phase (MCP).

Selon un aspect de l'invention, le matériau à changement de phase est un composé comprenant des composés inorganiques tels qu'un alliage de sels organiques et d'eau.

Selon un aspect de l'invention, le matériau à changement de phase est un composé comprenant des composés organiques tels que les paraffines et les acides gras.

Selon un aspect de l'invention, le matériau à changement de phase est un composé comprenant des composés eutectiques.

Selon un aspect de l'invention, le matériau à changement de phase est un composé comprenant des composés d'origine végétale.

L'invention concerne également un faisceau d'échange comportant une pluralité de micro tubes, le faisceau d'échange comprenant au moins un collecteur comprenant une pluralité de moyens de connexion coopérant avec les orifices borgnes des rivets des micro tubes.

Le collecteur est un dispositif de maintien des micro tubes.

Les moyens de connexions permettent de connecter mécaniquement les micro tubes au collecteur afin de les maintenir en position pour constituer le faisceau d'échange.

Les moyens de connexions permettent de garantir un pas régulier entre les micro tubes pour ménager un espace d'écoulement optimisé d'un fluide caloporteur, assurant l'efficacité de l'échange thermique entre les micro tubes et le fluide, à moindre perte de charge.

Selon un aspect de l'invention, les moyens de connexion sont des pions.

Selon un aspect de l'invention, les micro tubes sont disposés sur le collecteur les uns sensiblement parallèles aux autres, les dispositifs de fermeture étant accolés les uns aux autres, garantissant un espace de circulation de fluide entre les micro tubes.

Les micro tubes sont sensiblement parallèles et peuvent ne pas être parfaitement parallèles, en particulier lorsque les micro tubes sont en matériau plastique. En effet, le matériau plastique étant un matériau souple, les micro tubes peuvent être légèrement courbés.

Selon un aspect de l'invention, les micro tubes sont disposés sur le collecteur de facon amovible. Les micro tubes peuvent être disposés sur le collecteur puis retirés du collecteur sans dommage sur le dispositif de fermeture, pouvant ainsi être de nouveau disposés sur le collecteur.

Selon un aspect de l'invention, le faisceau d'échange comprend deux collecteurs entre lesquels sont disposés les micro tubes.

Selon un aspect de l'invention, le faisceau d'échange comprend au moins une entretoise disposée entre les deux collecteurs.

L'entretoise permet de rigidifier le faisceau d'échange, en particulier lorsque les micro tubes sont en matériau plastique.

Selon un aspect de l'invention, ladite au moins une entretoise est disposée en lieu et place d'un micro tube entre les deux collecteurs.

L'invention concerne également une batterie thermique comprenant un faisceau d'échange.

Les but, objet et caractéristiques de la présente invention ainsi que ses avantages apparaîtront plus clairement à la lecture de la description ci-dessous, des modes de réalisation préférés faisant référence aux dessins dans lesquels :
- la figure 1 montre une vue, en coupe, d'un micro tube comprenant un dispositif de fermeture selon l'invention
- la figure 2a montre une vue, en perspective, d'un faisceau d'échange thermique de stockage dans lequel trois tubes sont représentés,
- la figure 2b montre une vue agrandie éclatée d'une extrémité latérale du faisceau d'échange thermique de stockage de la figure 2a,
- la figure 3 montre une vue, en perspective, d'un faisceau d'échange thermique de stockage dans lequel deux tubes et une entretoise sont représentés,

La description détaillée ci-après a pour but d'exposer l'invention de manière suffisamment claire et complète, notamment à l'aide d'exemples, mais ne doit en aucun cas être regardée comme limitant l'étendue de la protection aux modes de réalisations particuliers et aux exemples présentés ci-après.

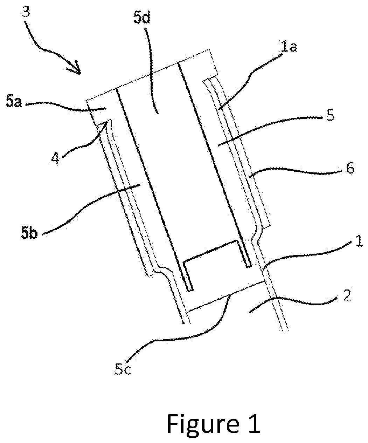

La figure 1 montre une vue, en coupe, d'un micro tube comprenant un dispositif de fermeture selon l'invention.

Le micro tube 1 est un tube cylindrique en matériau synthétique, particulièrement en matériau plastique de forme longitudinale, c'est à dire que sa longueur est bien plus importante que son diamètre. Sa dénomination tient du fait de ses faibles dimensions en comparaison aux dimensions habituellement rencontrées dans le domaine des véhicules automobiles. En effet, un tel micro tube a un diamètre de l'ordre de 3 à 6 millimètres et en particulier 4 millimètres et une longueur comprise entre 100 et 600 millimètres.

Le micro tube 1 comprend un matériau à changement de phase (MCP) 2. Il est obturé en son extrémité 4 par un dispositif de fermeture 3. Ce dispositif de fermeture 3 comprend un insert d'obturation qui est un rivet 5 et une bague d'expansion 6 disposée sur la paroi externe du micro tube 1, en son extrémité la

Le rivet 5 comprend une tête 5a et un corps 5b. La tête 5a et le corps 5b sont cylindriques, le diamètre de la tête 5a étant supérieur au diamètre du corps 5b.

La tête 5a du rivet 5 peut également être d'une autre forme, par exemple en forme de cône tronqué. Dans ce cas, la base du cône est située à la jonction entre la tête 5a et le corps 5b du rivet 5. Le diamètre de la base du cône est alors supérieur au diamètre du corps 5a.

La tête du rivet peut alternativement être bombée, par exemple en forme de demi-sphère. Dans ce cas, la partie plate de la demi sphère est située à la jonction entre la tête 5a et le corps 5b du rivet 5. Le diamètre de la demi sphère est alors supérieur au diamètre du corps 5a.

Ainsi, le diamètre de la partie tête 5a en prise sur l'embouchure 4 du micro tube 1 est supérieur au diamètre extérieur du micro tube 1 afin de permettre à la partie tête 5a d'être en prise sur l'embouchure 4 du micro tube 1. Cette prise contribue à l'étanchéité du rivet 5 vis-à-vis du MCP 2 du micro tube 1. En effet, lorsque le rivet 5 est installé dans le micro tube 1, sa partie tête 5a écrase avantageusement la partie de l'extrémité la du micro tube 1 sur laquelle il est en prise. Il n'est donc pas nécessaire de prévoir un joint entre la partie tête 5a du rivet 5 et le micro tube 1.

Le rivet 5 est aveugle. Il ne nécessite pas de double accès en ses deux extrémités pour sa fixation au micro tube 1.

Le rivet 5 est étanche, c'est à dire que son corps 5b n'est pas percé de bout en bout, mais seulement d'un côté. Ainsi, le fond 5c du rivet 5 qui est en contact avec le MCP 2 est fermé.

Avant son expansion dans l'extrémité la du micro tube 1, le rivet 5 comprend un corps 5b creux comprenant en son sein une tige dont l'extrémité située dans le corps 5b creux du rivet 5 est renflée.

Lors de l'opération de rivetage du rivet 5 dans le micro tube 1, un outil de rivetage tire sur la tige qui se casse automatiquement laissant dans le corps 5b creux un orifice borgne 5d.

Sur la figure 1, le rivet 5 est expansé dans l'extrémité la du micro tube 1.

Le rivet est de préférence métallique, en matériau aluminium, inox ou acier.

Un rivet plastique, s'il est étanche et aveugle convient également l'invention.

Le micro tube peut être réalisé en matériau métallique ou synthétique.

Sur la figure 1, une bague d'expansion 6 est située autour de l'extrémité la du micro tube 1, à l'emplacement du corps 5b du rivet 5

La bague d'expansion 6 permet d'assurer une bonne retenue à l'expansion du rivet 5 dans le micro tube 1, en particulier lorsque le micro tube 1 est en matériau synthétique, par exemple, en plastique.

La bague d'expansion 6 permet la compression du corps 5b expansé du rivet 5 contre la paroi interne de l'extrémité la du micro tube 1. Ainsi, une bonne étanchéité entre le rivet 5 et le micro tube 1 est garantie.

Dans le cas d'un micro tube 1 en matériau métallique, la bague d'expansion 6 est optionnelle. Si la compression du rivet 5 contre l'extrémité la de la paroi interne du micro tube 1 à l'expansion est suffisante pour garantir une bonne étanchéité entre le micro tube 1 et le rivet 5, la bague d'expansion n'est pas obligatoire.

La bague d'expansion 6 a la forme d'un cylindre creux. Avantageusement, pour des raisons de tenue mécanique, la bague 6 comprend un matériau métallique.

La hauteur de la bague 6 est sensiblement égale à la hauteur de la partie expansée du rivet 5. Avant l'expansion du rivet 5 dans l'extrémité la du micro tube 1, la bague d'expansion 6 couvre donc l'extrémité la du micro tube 1 depuis l'embouchure 4 du micro tube 1 jusqu'à l'extrémité renflée de la tige située dans le corps 5b creux du rivet 5.

C'est un mode préférentiel de réalisation, mais cela n'est pas du tout limitatif. La bague d'expansion 6 peut être plus longue et couvrir entièrement le rivet 5. Elle peut également ne couvrir qu'une petite partie de l'extrémité la du micro tube 1, l'essentiel étant que cette partie de l'extrémité la du micro tube 1 soit en compression entre le rivet 5 et la bague d'expansion 6.

Après expansion du rivet 5 dans l'extrémité la du micro tube 1, et comme illustré en figure 1, l'extrémité la du micro tube 1 est pincée entre la bague 6 et le rivet 5. Cela permet de renforcer l'étanchéité du rivet 5 dans le micro tube 1.

La tenue mécanique du rivet 5 dans l'extrémité la du micro tube 1 est renforcée, ce qui réduit de manière considérable le risque d'expulsion du rivet 5 lié aux contraintes environnementales (température, pression) subies par le micro tube 1.

Un micro tube 1 peut être fermé en ses deux extrémités par le même dispositif de fermeture ou bien par deux dispositifs de fermeture différents.

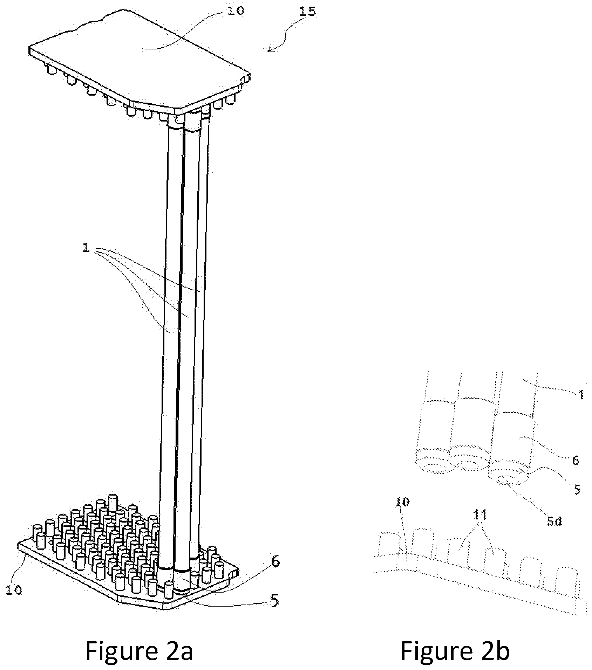

La figure 2a illustre un faisceau d'échange thermique de stockage 15, conformément à l'invention.

Le faisceau d'échange thermique de stockage 15 comprend deux collecteurs 10 et des micro tubes 1. Seuls sont représentés trois micro tubes 1. Toutefois, afin de former le faisceau d'échange thermique de stockage 15, d'autres tubes sont ajoutés mais non représentés sur la figure 2a.

Les collecteurs 10 sont des plaques qui peuvent être par exemple réalisées en matériau plastique ou métallique. Chaque collecteur 10 est doté d'une pluralité de moyens de connexion 11. Selon l'exemple illustré en figure la, les moyens de connexion sont des plots 11, en particulier des plots cylindriques.

Les moyens de connexion 11 sont de forme telle qu'ils sont aptes à coopérer avec les orifices borgnes 5d des rivets 5 de micro tubes (1). Ainsi, la forme des plots 11 peut ne pas être cylindrique. Par exemple, un plot 11 conique peut coopérer avec un orifice borgne 5d cylindrique.

L'orifice borgne 5d cylindrique est généralement de section sensiblement circulaire. Un plot 11 cylindrique de section en forme d'étoile peut avantageusement coopérer avec un tel orifice borgne 5d.

Un plot 11 peut être en forme de prisme à base quelconque (rectangulaire, carrée, étoile, triangulaire), ou même en forme de cône tronqué ou de pyramide tronquée, l'essentiel étant que la forme de l'orifice borgne 5d qui lui est associé soit apte à coopérer avec le plot 11. De manière avantageuse, la forme de l'orifice borgne 5d est complémentaire de la forme du plot 11.

Le diamètre des plots 11 est légèrement inférieur au diamètre des orifices borgnes 5d afin que les plots 11 puissent être insérés dans les orifices borgnes 5d. Le diamètre des orifices borgnes 5d ne doit pas être trop supérieur à celui des plots 11 sinon les micro tubes 1 ne sont plus suffisamment maintenus sur le collecteur 10, particulièrement lors de vibrations dues au roulage du véhicule dans des conditions extrêmes.

Par exemple une différence de diamètre de 0.3mm entre les plots 11 et les orifices borgnes 5d avec une tolérance de ±0.1 mm sur les dimensions des plots 11 et des orifices borgnes 5d est un choix avantageux.

La forme des collecteurs 10 représentés sur la figure 2a est un exemple de réalisation. On adaptera la forme des collecteurs à l'application souhaitée, la forme du faisceau d'échange thermique de stockage 15 étant directement liée à la forme des collecteurs 10. Les collecteurs 10 peuvent être identiques ou de forme distincte. Il est par exemple possible de prévoir sur un des collecteurs un système de connectique à un élément extérieur au faisceau 15 que l'autre n'aura pas.

La figure 2b est une vue agrandie et éclatée de la figure la.

Les orifices borgnes 5d des rivets 5 des micro tubes 1 sont de forme complémentaire aux plots 11 du collecteur 10. Ils sont donc apte à coopérer ensemble. Les plots 11 du collecteur 10 peuvent être insérés dans les orifices borgnes 5d des rivets 5 des micro tubes 1.

Pour des raisons de compacité du faisceau thermique de stockage 15, il est avantageux de disposer les plots 11 en quinconce sur le collecteur 10.

Un exemple de réalisation compact correspond à une organisation des plots 11 sur le collecteur 10 telle que les dispositifs de fermeture 3 soient accolés les uns aux autres tout en garantissant un espace de circulation de fluide entre les micro tubes 1.

Les dispositifs de fermeture peuvent être accolés par les têtes 5a des rivets 5 et/ou par les bagues d'extension 6. Les diamètres des têtes 5a des rivets 5 et/ou des bagues d'extension 6 doit être choisi de manière à garantir un espace suffisant entre les micro tubes 1 afin de permettre un bon échange entre ce fluide et le MCP 2 des micro tubes.

L'espacement entre deux parois externes de micro tubes 1 adjacents est par exemple de l'ordre de 0.6 millimètre pour permettre une bonne circulation du fluide entre les micro tubes 1 et bénéficier d'une solution de faisceau d'échange thermique de stockage compacte.

La fermeture des micro tubes 1 peut se faire en amont de l'assemblage des batteries thermiques, leur étanchéité peut être vérifiée avant montage du faisceau d'échange thermique de stockage 15. Cela permet au cours de la fabrication de ne rejeter que les micro tubes 1 présentant des défauts d'étanchéité et non pas le faisceau d'échange thermique de stockage 15 complet. Cela simplifie également l'assemblage des micro tubes 1 dans le faisceau 15, et donc la chaîne d'assemblage complète de fabrication de la batterie thermique.

Le faisceau d'échange 15 peut être utilisé dans les batteries thermiques mais aussi dans les dispositifs thermiques intégrés aux échangeurs de chaleur, par exemple dans les boîtes collectrices.

De manière avantageuse, il est possible de maintenir les collecteurs 10 du faisceau 15 par des entretoises 18, par exemple de même diamètre que les tubes 1. Cela permet de rigidifier le faisceau 15.

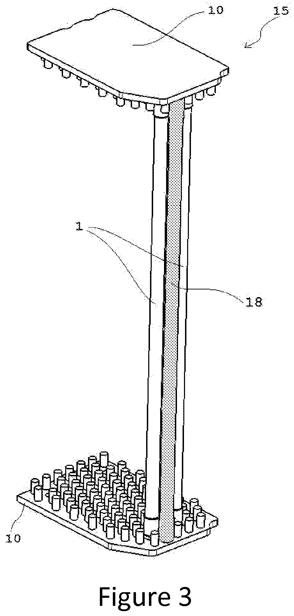

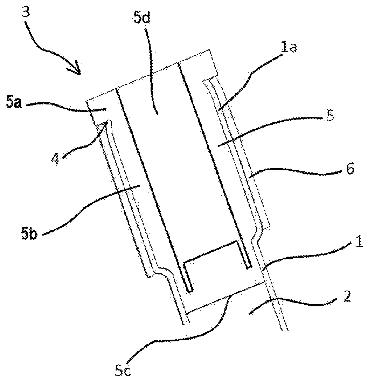

La figure 3 illustre un faisceau d'échange thermique de stockage 15 comprenant deux collecteurs 10, des micro tubes 1 et au moins une entretoise 18. Sur cette figure 3, deux micro tubes 1 et une entretoise 18 sont représentés. Toutefois, afin de former le faisceau d'échange thermique de stockage 15, d'autres tubes sont ajoutés, mais ils ne sont pas représentés.

De manière avantageuse, plusieurs entretoises sont disposées au sein du faisceau 15, en particulier en bordure du faisceau.

Par exemple, pour un faisceau comprenant des entretoises rectangulaires, il est avantageux de disposer quatre entretoises 18 aux quatre coins des collecteurs 10.

Les entretoises 18 peuvent être assemblées sur les collecteurs 10 en amont de l'assemblage des micro tubes 1. En effet, les micro tubes 1 sont flexibles et peuvent se courber légèrement.

A la fin de l'assemblage, les entretoises 18 peuvent être laissées sur le faisceau 15. Ainsi, la structure du faisceau est rigide sans y ajouter de pièce de rigidification complémentaire.

Cependant, pour des raisons d'optimisation du volume total de PCM dans le faisceau, les entretoises 15 peuvent être remplacées en fin d'assemblage du faisceau 15 par des micro tubes 1. Avantageusement, les entretoises 18 peuvent être réutilisées pour la fabrication d'un autre faisceau de micro tubes 1.

Cette invention apporte de nombreux avantages, tels que par exemple la simplicité d'assemblage, la réduction du temps d'assemblage, l'absence de nécessité d'utiliser des pièces de maintien additionnelles pour maintenir les micro tubes 1 sur le collecteur 10, un faible coût de fabrication.

Enfin, il est envisageable de produire en grande série des micro tubes 1 fermés standards quelques soient les applications. C'est la géométrie du collecteur 10 qui sera propre à chaque application, permettant des ajustements sur le nombre de micro tubes 1, la forme du faisceau d'échange thermique de stockage 15 et l'espacement entre chaque micro tube 1. Cela permet une certaine standardisation, ce qui contribue également à un gain de coût et de temps de fabrication.

A l'inverse, la standardisation des collecteurs 10 présente également un avantage, notamment en termes de réduction des coûts. Dans ce cas, c'est la longueur des micro tubes 1 qui est adaptée à l'application.

Le mode de réalisation du faisceau thermique de stockage 15 représenté présente avantageusement deux collecteurs 15 similaires et symétriques. Il est parfaitement envisageable d'utiliser l'invention pour connecter une première extrémité des micro tubes 1 à un collecteur 10, la deuxième extrémité des micro tube 1 étant connectée de manière différente à un deuxième collecteur ou à un autre dispositif, par exemple un dispositif de centrage par l'extérieur des bagues d'expansion 6.

## Revendications

1. Micro tube (1) de faisceau de stockage d'un dispositif thermique de stockage pour véhicule automobile comprenant au moins une embouchure (4) et comprenant en son sein un matériau (2) adapté pour stocker et libérer une quantité déterminée de chaleur, un dispositif de fermeture (3) comprenant un insert d'obturation (5) de l'embouchure (4) dudit micro tube (1), **caractérisé en ce que** l'insert d'obturation (5) est un rivet (5) aveugle étanche comprenant un corps (5b) comportant un orifice borgne (5d), ledit rivet étant expansé dans une extrémité (1a) dudit micro tube (1).

2. Micro tube (1) selon la revendication 1 **caractérisé en ce que** ledit dispositif de fermeture (3) comprend une bague d'expansion (6) disposée sur la paroi externe de ladite extrémité (1a) du micro tube (1), ladite extrémité (1a) du micro tube (1) étant pincée entre la bague d'expansion (6) et le rivet (5).

3. Micro tube (1) selon la revendication 2 **caractérisé en ce que** le rivet (5) comprend une tête (5a), l'orifice borgne (5d) du rivet 5 débouchant dans la tête (5a) du rivet (5), la bague d'expansion (6) étant en butée contre la tête (5a) du rivet (5).

4. Micro tube (1) selon l'une quelconque des revendications 2 ou 3 **caractérisé en ce que** ladite bague d'expansion (6) est en inox ou en aluminium.

5. Micro tube (1) selon l'une quelconque des revendications précédentes **caractérisé en ce que** le matériau (2) adapté pour stocker et libérer une quantité déterminée de chaleur comprend un matériau à changement de phase.

6. Faisceau d'échange (15) comportant une pluralité de micro tubes (1) selon l'une quelconque des revendications précédentes **caractérisé en ce qu'**il comprend au moins un collecteur (15) comprenant une pluralité de moyens de connexion (11) coopérant avec les orifices borgnes (5d) des rivets (5) des micro tubes (1).

7. Faisceau d'échange (15) selon la revendication 6, **caractérisé en ce que** les moyens de connexion (11) sont des pions.

8. Faisceau d'échange (15) selon l'une quelconque des revendications 6 ou 7, **caractérisé en ce que** les micro tubes (1) sont disposés sur le collecteur (15) les uns sensiblement parallèles aux autres, les dispositifs de fermeture (3) étant accolés les uns aux autres, garantissant un espace de circulation de fluide (14) entre les micro tubes (1).

9. Faisceau d'échange (15) selon l'une quelconque des revendications 6 à 8, **caractérisé en ce qu'**il comprend deux collecteurs (15) entre lesquels sont disposés les micro tubes (1).

10. Faisceau d'échange (15) selon la revendication 9, **caractérisé en ce qu'**il comprend au moins une entretoise (18) disposée entre les deux collecteurs (15).

11. Faisceau d'échange (15) selon la revendication 10, **caractérisé en ce que** ladite au moins une entretoise (18) est disposée en lieu et place d'un micro tube (1) entre les deux collecteurs (15).

12. Batterie thermique comprenant un faisceau d'échange (15) selon l'une quelconque des revendications 6 à 10.

## Patentansprüche

1. Mikrorohr (1) eines Speicherrohrbündels einer Wärmespeichervorrichtung für ein Kraftfahrzeug, umfassend mindestens ein Ansatzstück (4) und umfassend in seinem Inneren ein zum Speichern und Freigeben einer bestimmten Wärmemenge geeignetes Material (2), wobei eine Verschließvorrichtung (3) einen Abdichtungseinsatz (5) des Ansatzstücks (4) des Mikrorohrs (1) umfasst, **dadurch gekennzeichnet, dass** der Abdichtungseinsatz (5) ein dichter Blindniet (5) ist, der einen Körper (5b) umfasst, der ein Sackloch (5d) aufweist, wobei der Niet in ein Ende (1a) des Mikrorohrs (1) gespreizt ist.

2. Mikrorohr (1) nach Anspruch 1, **dadurch gekennzeichnet, dass** die Verschließvorrichtung (3) einen Spreizring (6) umfasst, der an der Außenwand des Endes (1a) des Mikrorohrs (1) angeordnet ist, wobei das Ende (1a) des Mikrorohrs (1) zwischen dem Spreizring (6) und dem Niet (5) eingeklemmt ist.

3. Mikrorohr (1) nach Anspruch 2, **dadurch gekennzeichnet, dass** der Niet (5) einen Kopf (5a) umfasst, wobei das Sackloch (5d) des Niets 5 im Kopf (5a) des Niets (5) mündet, wobei der Spreizring (6) an den Kopf (5a) des Niets (5) anstößt.

4. Mikrorohr (1) nach einem der Ansprüche 2 oder 3, **dadurch gekennzeichnet, dass** der Spreizring (6) aus Edelstahl oder aus Aluminium ist.

5. Mikrorohr (1) nach einem der vorhergehenden Ansprüche, **dadurch gekennzeichnet, dass** das zum Speichern und Freigeben einer bestimmten Wärmemenge geeignete Material (2) ein Phasenwechselmaterial umfasst.

6. Tauscherbündel (15) mit einer Vielzahl von Mikrorohren (1) nach einem der vorhergehenden Ansprüche, **dadurch gekennzeichnet, dass** es mindestens eine Endplatte (15) umfasst, die eine Vielzahl von Verbindungsmitteln (11) umfasst, die mit den Sacklöchern (5d) der Nieten (5) der Mikrorohre (1) zusammenwirken.

7. Tauscherbündel (15) nach Anspruch 6, **dadurch gekennzeichnet, dass** die Verbindungsmittel (11) Stifte sind.

8. Tauscherbündel (15) nach einem der Ansprüche 6 oder 7, **dadurch gekennzeichnet, dass** die Mikrorohre (1) auf der Endplatte (15) im Wesentlichen parallel zueinander angeordnet sind, wobei die Verschließvorrichtungen (3) aneinander anliegen, so dass ein Fluidzirkulationsraum (14) zwischen den Mikrorohren (1) garantiert wird.

9. Tauscherbündel (15) nach einem der Ansprüche 6 bis 8, **dadurch gekennzeichnet, dass** es zwei Endplatten (15) umfasst, zwischen denen die Mikrorohre (1) angeordnet sind.

10. Tauscherbündel (15) nach Anspruch 9, **dadurch gekennzeichnet, dass** es mindestens ein Distanzstück (18) umfasst, das zwischen den beiden Endplatten (15) angeordnet ist.

11. Tauscherbündel (15) nach Anspruch 10, **dadurch gekennzeichnet, dass** das mindestens eine Distanzstück (18) umfasst, anstelle eines Mikrorohrs (1) zwischen den beiden Endplatten (15) angeordnet ist.

12. Wärmespeicher mit einem Tauscherbündel (15) nach einem der Ansprüche 6 bis 10.

## Claims

1. Micro-tube (1) of a storage bundle of a thermal storage device for a motor vehicle, comprising at least one mouth (4) and comprising within it a material (2) suitable for storing and releasing a given quantity of heat, a closure device (3) comprising an insert (5) for blocking the mouth (4) of said micro-tube (1), **characterized in that** the blocking insert (5) is a sealed blind rivet (5) comprising a body (5b) that has a blind orifice (5d), said rivet being expanded in one end (1a) of said micro-tube (1).

2. Micro-tube (1) according to Claim 1, **characterized in that** said closure device (3) comprises an expansion ring (6) arranged on the outer wall of said end (1a) of the micro-tube (1), said end (1a) of the micro-tube (1) being pinched between the expansion ring (6) and the rivet (5).

3. Micro-tube (1) according to Claim 2, **characterized in that** the rivet (5) comprises a head (5a), the blind orifice (5d) of the rivet (5) opening into the head (5a) of the rivet (5), the expansion ring (6) being in abutment against the head (5a) of the rivet (5) .

4. Micro-tube (1) according to either one of Claims 2 and 3, **characterized in that** said expansion ring (6) is made of stainless steel or of aluminium.

5. Micro-tube (1) according to any one of the preceding claims, **characterized in that** the material (2) that is suitable for storing and releasing a given quantity of heat comprises a phase change material.

6. Exchange bundle (15) comprising a plurality of micro-tubes (1) according to any one of the preceding claims, **characterized in that** it comprises at least one header (15) comprising a plurality of connection means (11) cooperating with the blind orifices (5d) of the rivets (5) of the micro-tubes (1).

7. Exchange bundle (15) according to Claim 6, **characterized in that** the connection means (11) are pegs.

8. Exchange bundle (15) according to either one of Claims 6 and 7, **characterized in that** the micro-tubes (1) are arranged on the header (15) essentially parallel to one another, the closure devices (3) being snug against one another, ensuring a space for circulation of fluid (14) between the micro-tubes (1).

9. Exchange bundle (15) according to any one of Claims 6 to 8, **characterized in that** it comprises two headers (15) between which the micro-tubes (1) are arranged.

10. Exchange bundle (15) according to Claim 9, **characterized in that** it comprises at least one spacer (18) arranged between the two headers (15).

11. Exchange bundle (15) according to Claim 10, **characterized in that** said at least one spacer (18) takes the place of one micro-tube (1) between the two headers (15).

12. Thermal battery comprising an exchange bundle (15) according to any one of Claims 6 to 10.
